# EUROPEAN PATENT APPLICATION

(11) **EP 4 847 332 A1**
(43) Date of publication of application: **02.12.2026**
(21) Application number: 25178900.4
(22) Date of filing: 26.05.2025
(51) Int. Cl.: B60W 10/02, B60W 10/06, B60W 30/18, B60W 10/184, B60W 40/10

(54) **ENSURING VEHICLE STANDSTILL**

(71) Applicant: Volvo Autonomous Solutions AB, 405 08 Göteborg (SE)
(72) Inventor: WIBERG, Wilhelm, 436 39 ASKIM (SE); BERGQUIST, Stefan, 417 27 GÖTEBORG (SE)
(74) Representative: Kransell & Wennborg KB

(57) **Abstract**

In an aspect, a computer system (14) configured to ensure that a vehicle (10) remains at standstill is provided, the computer system comprising processing circuitry (11) configured to determine (S101) that the vehicle (10) is to remain at standstill, detect (S102) rotational movement of an output shaft (16) of a vehicle gearbox (21), and in response thereto to prevent (S103) positive torque from reaching vehicle wheels (23, 24).

## Description

### TECHNICAL FIELD

The disclosure relates to ensuring that a vehicle remains at standstill. In particular aspects, the disclosure relates to preventing a vehicle from unintentional movement. The disclosure can be applied in vehicles such as cars, busses, light-weight trucks, mid-weight trucks, heavy-duty trucks and construction equipment. Although the disclosure may be described with respect to a particular vehicle, the disclosure is not restricted to any particular vehicle.

### BACKGROUND

In autonomous and semi-autonomous vehicle applications, particularly for heavy-duty vehicles, it is important that the vehicle remains reliably at a standstill when required. This is especially critical during operations such as refueling, loading, service, or any situation where human operators may be in close proximity to the vehicle.

Conventionally, standstill is maintained through the application of braking systems, including air-controlled primary brakes or spring-controlled secondary brakes commonly found in heavy vehicles. However, in certain situations, particularly where the engine can generate high torque, these braking systems may be insufficient to fully restrain the vehicle. Even when brakes are engaged, unintended torque applied through the drivetrain may overcome the braking force, potentially leading to vehicle movement.

Such unintended movement poses significant safety risks, including the possibility of collisions or operator injury. Although control systems are typically designed to prevent unintentional torque application, the complexity of modern vehicle control architectures, particularly those involving multiple functional interfaces and subsystems, can make it challenging to ensure that torque is never inadvertently requested or transmitted to the wheels under all operational conditions.

Accordingly, there exists a need for improved methods to ensure that a vehicle remains stationary under all conditions where standstill is required, particularly in high-torque and safety-critical environments.

### SUMMARY

According to a first aspect of the disclosure, there is provided a computer system configured to ensure that a vehicle remains at standstill, the computer system comprising processing circuitry configured to: determine that the vehicle is to remain at standstill; detect rotational movement of an output shaft of a vehicle gearbox; and in response thereto prevent positive torque from reaching vehicle wheels.

The first aspect of the disclosure may seek to resolve an issue of how to ensure that a vehicle remains reliably at standstill in safety-critical situations, particularly when unintended torque may be applied to the drivetrain despite braking. A technical benefit may include enabling early detection of torque-induced movement and dynamic prevention of propulsion, thereby improving vehicle safety, especially in contexts involving autonomous operation, human-machine interaction, or heavy vehicle environments.

In some examples, the processing circuitry is configured to determine that the vehicle is to remain at standstill by detecting that brakes of the vehicle are engaged. A technical benefit may include enabling the system to reliably infer standstill intent using existing vehicle signals, reducing the need for additional components or user input.

In some examples, the processing circuitry is configured to detect rotational movement of an output shaft by comparing the rotational movement to a predefined threshold, and the preventing of positive torque occurs when the detected movement exceeds the threshold. A technical benefit may include filtering out minor or harmless movements, thereby reducing false positives and avoiding unnecessary interventions.

In some examples, the predefined threshold is defined in terms of angular velocity, angular displacement, or torsional deformation of the output shaft. A technical benefit may include allowing flexible and precise calibration of detection sensitivity based on the physical characteristics of the drivetrain.

In some examples, the processing circuitry is configured to dynamically adjust the predefined threshold based on one or more of: vehicle load, road gradient, braking pressure, ambient temperature, or vehicle acceleration profile. A technical benefit may include enabling adaptive and context-sensitive behavior that improves detection accuracy under varying operating conditions.

In some examples, the output shaft is monitored utilizing one or more rotational sensors arranged proximate to the gearbox. A technical benefit may include enabling early detection of torque transmission close to the source, before movement propagates to the wheels.

In some examples, the rotational sensors are arranged to be positioned at axially spaced-apart locations along the output shaft to enable detection of torsional deformation. A technical benefit may include allowing measurement of mechanical twist as a direct indicator of applied torque, even before rotation occurs at the wheels.

In some examples, the processing circuitry is configured to, upon preventing positive torque from reaching the vehicle wheels, cut fuel injection to a vehicle engine, disengage a clutch between the engine and the gearbox, and/or issue a torque reduction command via an engine control interface. A technical benefit may include offering multiple levels of intervention to suit different drivetrain architectures and fault conditions.

In some examples, the detected rotational movement corresponds to torsional deformation of the output shaft resulting from opposing engine torque and braking force. A technical benefit may include detecting incipient motion caused by internal mechanical strain before any actual vehicle movement occurs.

In some examples, the processing circuitry is configured to discontinue detection of rotational movement when the vehicle is no longer required to remain at standstill. A technical benefit may include reducing computational load and avoiding unnecessary supervision when it is no longer needed, improving overall system efficiency.

In some examples, the processing circuitry is configured to determine that the vehicle is to remain at standstill based on a control mode selected for the vehicle, comprising at least one of: a parking mode, a loading mode, a refueling mode or an autonomous standby mode. A technical benefit may include enabling automatic activation of the standstill supervision logic based on operational context, reducing the chance of user error or omission.

In some examples, the processing circuitry is configured to initiate a diagnostic or alert signal if rotational movement is detected while the vehicle is intended to remain at standstill. A technical benefit may include improving fault awareness and providing immediate feedback to operators or external systems about potential safety risks.

In some examples, the processing circuitry is configured to log the detection of rotational movement and any countermeasures taken for post-event analysis. A technical benefit may include supporting diagnostics, traceability, and compliance with safety auditing requirements in autonomous or semi-autonomous systems.

In some examples, the output shaft comprises a toothed wheel or cogwheel mounted to the shaft, and the rotational sensor is configured to detect passage of the teeth to determine shaft movement. A technical benefit may include leveraging standard, robust sensing components for cost-effective and accurate rotational monitoring.

In some examples, the processing circuitry is configured to continue detection of rotational movement after initiation of the preventing of positive torque from reaching vehicle wheels. A technical benefit may include enabling verification that the intervention was successful and that unintended movement has ceased.

In some examples, rotational movement is detected using a combination of angular velocity and torsional deformation measurements. A technical benefit may include improving detection robustness and precision by combining multiple sensing modalities.

In some examples, a vehicle is provided comprising the computer system of the first aspect.

According to a second aspect of the disclosure, there is provided a method of a computer system for ensuring that a vehicle remains at standstill, the method comprising: determining that the vehicle is to remain at standstill; detecting rotational movement of an output shaft of a vehicle gearbox; and in response thereto preventing positive torque from reaching vehicle wheels.

In some examples, a computer program product is provided comprising program code for performing, when executed by the processing circuitry, the method of the second aspect.

In some examples, a non-transitory computer-readable storage medium is provided comprising instructions, which when executed by the processing circuitry, cause the processing circuitry to perform the method of the second aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 illustrates a vehicle in the form of a truck in which examples of the present disclosure may be implemented.
FIG. 2 shows an exemplary system diagram of a computer system with which the truck of FIG. 1 is equipped according to the present disclosure.
FIG. 3A illustrates a schematic view of a drivetrain layout of the truck according to an example of the present disclosure.
FIG. 3B illustrates a schematic view of a drivetrain layout of the truck according to another example of the present disclosure.
FIG. 4 shows a flowchart illustrating an example method of ensuring that a vehicle remains at standstill according to the present disclosure.
FIG. 5 shows a flowchart illustrating another example method of ensuring that a vehicle remains at standstill according to the present disclosure.
FIG. 6 is a schematic diagram of a computer system for implementing examples disclosed herein.

### DETAILED DESCRIPTION

Aspects set forth below represent the necessary information to enable those skilled in the art to practice the disclosure.

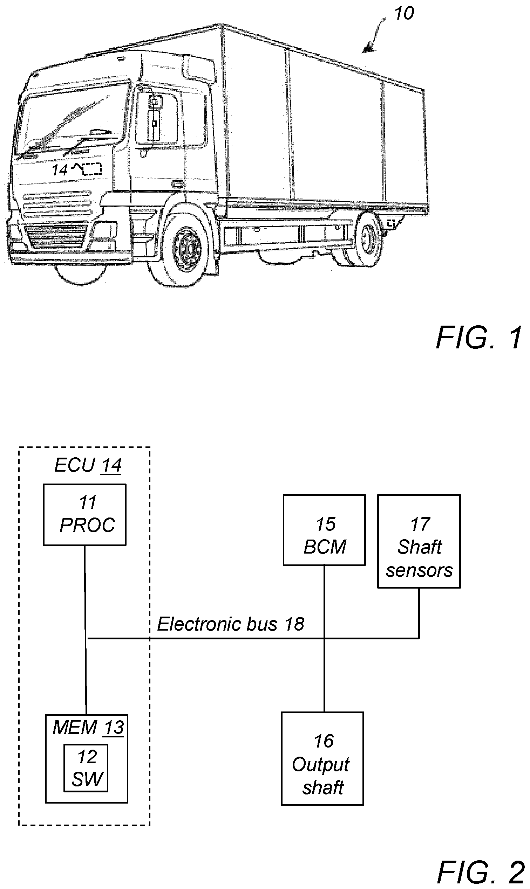

FIG. 1 illustrates a vehicle in the form of a truck 10 in which examples of the present disclosure may be implemented. The truck 10 is equipped with a computer system 14, such as an Electronic Control Unit (ECU), configured to control operational functions of the vehicle. The ECU 14 is operatively connected to various subsystems of the vehicle including, but not limited to, the engine control system, braking system, and drivetrain components.

FIG. 2 shows an exemplary system diagram of the computer system 14 with which the truck 10 of FIG. 1 is equipped according to the present disclosure.

In this example, the ECU 14 is configured to determine when the vehicle is intended to remain at standstill, for instance by receiving a standstill status signal from a brake control module (BCM) 15 indicating that braking systems are engaged, and to supervise the rotational behavior of an output shaft 16 of a gearbox of the truck 10.

For this purpose, one or more rotational sensors 17 may be provided at or near the output shaft 16 to detect shaft rotation or torsional deformation, such as twist, of the shaft. Based on sensor signals, the ECU 14 can determine whether the shaft 16 is undergoing movement indicative of applied torque despite the vehicle being intended to remain stationary. If movement exceeding a predefined threshold is detected, the ECU 14 may take countermeasures to prevent positive torque from reaching the wheels, such as by stopping the engine or interrupting fuel injection.

Although the vehicle 10 in FIG. 1 is depicted as a heavy-duty truck, examples of the present disclosure may be implemented in other types of vehicles such as passenger cars, buses, light- or mid-duty trucks, construction equipment, or autonomous platforms. As is understood, the vehicle 10 may be capable of fully or partially autonomous operation or provided with automated driving features such as adaptive cruise control (ACC), in which maintaining vehicle standstill during specific operations (e.g., refueling or loading) is safety-critical.

The ECU 14 generally comprises processing circuitry (PROC) 11 and a storage medium (MEM) 13 associated with the microprocessor, such as a Random Access Memory (RAM), a Flash memory or a hard disk drive. One or more computer programs (SW) 12 may be stored in the storage medium 13.

The processing circuitry 11 is arranged to cause the ECU 14 to perform desired operations when the appropriate computer program 12 comprising computer-executable instructions is downloaded to the storage medium 13 and executed by the processing circuitry 11. The storage medium 13 may also be a computer program product comprising the computer program 12. Alternatively, the computer program 12 may be transferred to the storage medium 13 by means of a suitable computer program product, such as a Digital Versatile Disc (DVD) or a memory stick. As a further alternative, the computer program 12 may be downloaded to the storage medium 13 over a network. The processing circuitry 11 may alternatively be embodied in the form of a digital signal processor (DSP), an application specific integrated circuit (ASIC), a field-programmable gate array (FPGA), a complex programmable logic device (CPLD), etc.

Communication between the various devices illustrated in FIG. 2 may occur via an electronic communication bus 18 such as e.g., a Controller Area Network (CAN) bus, a Local Interconnect Network (LIN) bus, an Ethernet bus, etc. Alternatively, wireless communication may occur between the devices using e.g. Wi-Fi or Bluetooth.

As previously mentioned, in situations where the ECU 14 of the truck 10 determines that the truck 10 is intended to remain at standstill, such as during loading, refueling, or operator interaction, existing systems rely primarily on braking mechanisms to maintain the stationary state. However, due to factors such as high engine torque and complex vehicle control interactions, there remains a risk that unintended torque may be applied to the drivetrain, potentially causing the truck 10 to move despite the application of brakes. Accordingly, there is a need for an improved method of ensuring vehicle standstill that provides earlier detection of such conditions and enables more robust preventive action to eliminate any unintended propulsion force.

As is understood, for a vehicle equipped with a combustion engine, the method would typically be applied in a scenario where the engine is running and thus is capable of instantly transmitting torque to the drive train.

There are numerous reasons for keeping the engine running while maintaining the vehicle at standstill, including (a) avoiding excessive battery drain from autonomous systems that draw significant electrical power when the engine is off, (b) maintaining pressurization for systems such as air brakes, (c) preserving active climate control function, and (d) ensuring overall system responsiveness, particularly by avoiding delays associated with restarting the engine or reinitializing systems.

For an electric motor, on the other hand, the method may also be applied in a scenario where the motor is in an idle state (i.e. energized but not rotating), since electric motors are typically capable of producing torque almost instantaneously in response to control signals.

Enforcing standstill is particularly important in safety-critical applications, such as those involving autonomous operation or close human interaction, where high system integrity is required. However, achieving reliable standstill can be challenging due to the risk of single-point failures. For example, a loss of air pressure in a pneumatic clutch system may inadvertently cause torque to be transmitted to the wheels, even when the vehicle is intended to remain stationary. As such, robust supervision of torque transfer is desirable to mitigate such failure scenarios and enhance overall system safety.

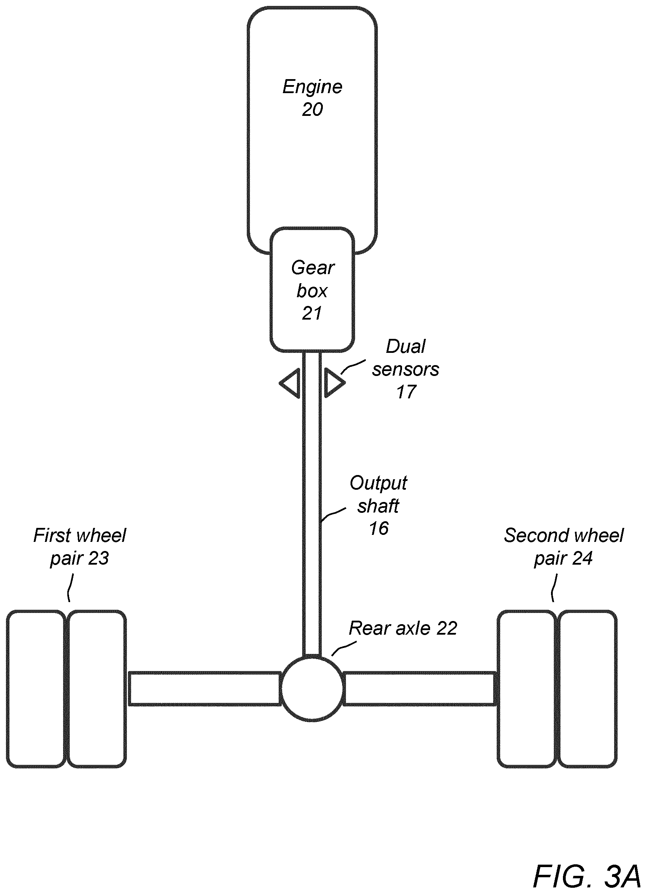

FIG. 3A illustrates a schematic view of a drivetrain layout in a vehicle such as truck 10. The drivetrain comprises an engine 20 operatively connected to a gearbox 21. The gearbox 21 transmits torque via an output shaft 16 to a rear axle 22, which drives a first and second wheel pair 23, 24. To detect movement of the output shaft 16, a pair of rotational sensors 17 are positioned on opposing sides of the shaft, forming a dual-sensor arrangement.

The sensors 17 may be configured to measure either angular displacement or torsional deformation of the shaft 16, or a combination thereof.

The sensors 17 may comprise any suitable type of rotational or angular displacement sensors, such as magnetic encoders, optical encoders, strain gauges, or Hall effect sensors. In one example, the sensors 17 are configured to detect a difference in rotational position between two spaced-apart locations along the shaft 16, which can be used to infer torsional deformation (i.e., twist) resulting from applied torque.

This configuration enables early detection of torque-induced movement, even before any significant rotational motion is transmitted to the rear axle 22 or wheels 23, 24. By placing the sensors 17 close to the gearbox 21, the system can capture transient torque behavior under braking conditions, allowing the ECU 14 (not shown in FIG. 3A) to determine whether a torque-cutting countermeasure should be initiated, as described previously described.

In another example, the rotational movement of the output shaft 16 is measured using one or more sensor arrangements comprising a cogwheel or toothed wheel mounted (not shown) to the shaft 16. The cogwheel may include a set number of evenly spaced teeth and rotate together with the shaft 16. A stationary sensor 17, such as a Hall effect sensor or optical encoder, may be positioned adjacent to the cogwheel to detect the passage of the teeth and thereby infer angular velocity or displacement. To improve measurement accuracy or enable detection of torsional twist, two such cogwheel-sensor pairs may be positioned at different axial positions along the output shaft 16.

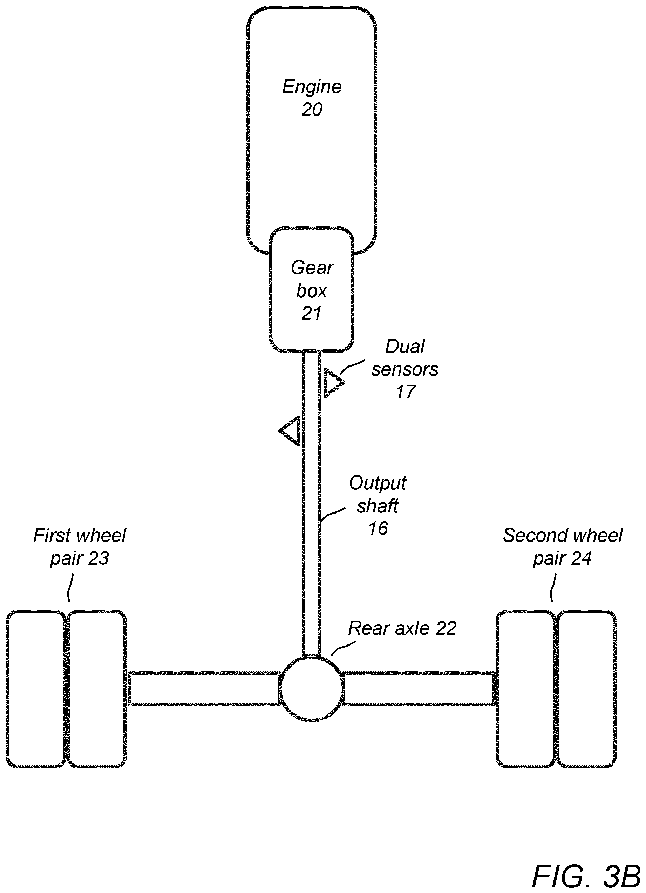

Thus, as shown in FIG. 3B, a configuration is envisaged where the sensors 17 are arranged at different axial positions along the output shaft 16.

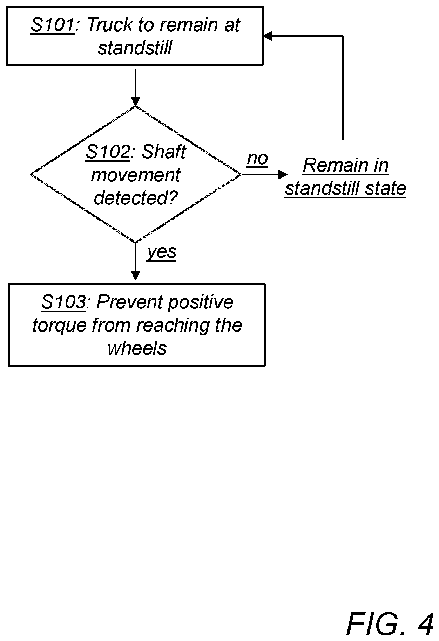

FIG. 4 shows a flowchart illustrating a method performed by the ECU 14 to ensure that the truck 10 remains at standstill when brakes are engaged. In the context of the present disclosure, rotational movement of the output shaft under standstill conditions is interpreted as being indicative of applied torque due to engine output, rather than resulting from actual vehicle propulsion or displacement. This interpretation leverages the known braking state of the vehicle and enables early detection of unintended torque transfer before wheel movement occurs. The ECU 14 operates by monitoring for torque-induced movement under braking conditions and taking action if such movement is detected. An example of a corresponding control routine is illustrated in the flowchart described below.

In a first step S101, the system determines that the truck 10 is intended to remain at standstill, for instance by concluding that the brakes of the truck 10 are engaged. This determination may be based on signals received from a BCM 15, indicating that a parking brake or service brake is active.

In step S102, the ECU 15 monitors an output shaft 16 of the vehicle gearbox 21. The monitoring is performed using the sensors 17, which may be configured to detect rotational movement of the shaft. In an example, a pair of sensors 17 may be arranged at axially spaced positions along the shaft 16 to allow detection of torsional deformation, such as twist, indicative of applied torque. As is understood, a single sensor may alternatively be envisaged.

If rotational movement is detected at the output shaft 16 while the vehicle is supposed to remain at standstill as indicated by the BCM 15, the ECU 14 proceeds to step S103. In this step, the ECU 14 initiates a countermeasure to prevent positive torque from reaching the wheels 23, 24 of the truck 10. This may be achieved by disabling the engine 20 (e.g., by cutting fuel injection), engaging a clutch, or issuing a torque reduction command via an engine control system. If no movement is detected in S102, the monitoring continues.

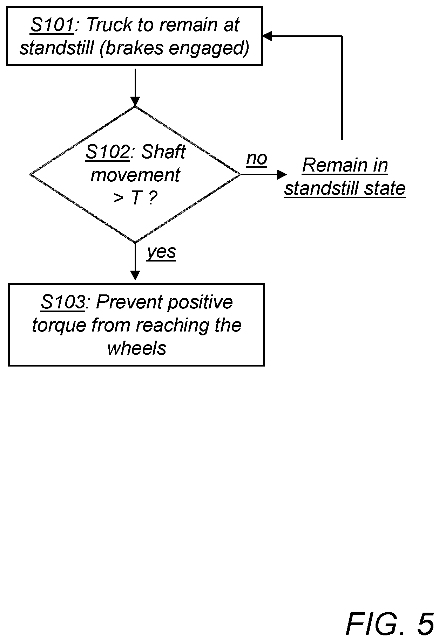

FIG. 5 illustrates a flowchart showing an example of the control logic executed by the ECU 14, in which a threshold-based decision is used to determine whether torque-preventing countermeasures should be taken.

In step S101, the ECU 14 determines that the truck 10 is intended to remain at standstill, based on braking signals received from the BCM 15. For example, an engaged parking brake or service brake indicates that the truck 10 should not be moving.

In step S102, the ECU 14 monitors the rotational behavior of the output shaft 16 using the sensors 17. The ECU 14 compares the detected rotational movement to a predefined threshold T. The threshold T may be defined in terms of one or more measurable parameters, such as angular velocity, angular displacement, torque, or torsional deformation. If the measured movement exceeds threshold T, the ECU 14 interprets it as a torque application that may compromise the standstill state of the truck 10.

If the shaft movement is below threshold T, no action is taken, and the truck 10 remains in the standstill state, wherein the ECU 14 returns to step S101. If, however, the threshold is exceeded, the system proceeds to step S103. In this step, the ECU 14 initiates one or more countermeasures to prevent positive torque from reaching the vehicle wheels 23, 24. This may include stopping fuel injection to the engine 20, disengaging a clutch, or sending a torque reduction command via the engine control system.

The use of a threshold ensures that small or non-critical movements (e.g., vibrations or mechanical slack) do not trigger unnecessary interventions. In some examples, the threshold T may be dynamically adjusted based on contextual parameters such as vehicle load, gradient, or current brake pressure.

In some examples, the threshold T used in step S102 may be dynamically adjusted by the ECU 14 in real time based on operational context. For instance, the threshold may be raised in situations involving increased mechanical stress on the drivetrain, such as when the truck 10 is operating on a steep incline or under heavy load, as such conditions can naturally result in greater driveshaft deformation even when the vehicle remains stationary. Conversely, in safety-critical situations such as downhill parking under load, the threshold may instead be lowered to allow earlier detection of unintended torque application, since even small torque levels may overcome braking force in such scenarios.

In some examples, the determination that the truck 10 is to remain at standstill, as described in step S101, may be based not only on brake status, but also on the operational mode of the truck 10. Such modes may include, for example, a parking mode, a loading or unloading mode, a refueling mode or an autonomous standby mode. The ECU 14 may receive mode information from a mode selection interface, a fleet management system, or other control modules, and activate the standstill monitoring functionality accordingly. This allows the ECU 14 to adapt its behavior to specific operational contexts where unintentional vehicle movement would pose safety risks.

In addition to or as an alternative to executing countermeasures as described in step S103, the ECU 14 may be configured to issue an alert signal when rotational movement of the output shaft 16 is detected under standstill conditions. The alert signal may trigger visual or audible warnings for nearby operators, or transmit a warning to a central monitoring system or vehicle interface. Such signaling may serve as a diagnostic warning, a driver notification, or part of a broader safety system, especially in environments involving human-machine interaction.

In some implementations, the ECU 14 may also be configured to record events where rotational movement is detected under standstill conditions. The detected movement, along with corresponding system responses (e.g., torque prevention measures, alert signaling), may be stored in a log file within the memory 13 for later analysis. This log may include time stamps, sensor readings, operating mode, and contextual data such as brake status or environmental conditions. Such event logging may be useful for diagnostics, safety validation, regulatory compliance, or forensic investigation.

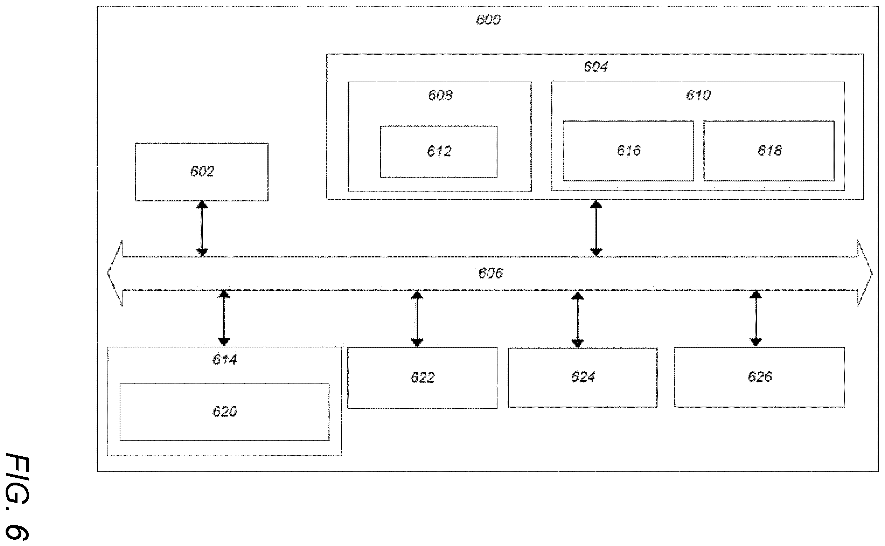

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include a processor device 602 (may also be referred to as a control unit), a memory 604, and a system bus 606. The computer system 600 may include at least one computing device having the processor device 602. The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with a processor device 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program product 620 stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out actions described herein. Thus, the computer-readable program code can comprise software instructions for implementing the functionality of the examples described herein when executed by the processor device 602. The processor device 602 may serve as a controller or control system for the computer system 600 that is to implement the functionality described herein.

The computer system 600 also may include an input device interface 622 (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may also include a communications interface 626 suitable for communicating with a network as appropriate or desired.
Example 1. A computer system (14) configured to ensure that a vehicle (10) remains at standstill, the computer system comprising processing circuitry (11) configured to: determine (S101) that the vehicle (10) is to remain at standstill; detect (S102) rotational movement of an output shaft (16) of a vehicle gearbox (21); and in response thereto prevent (S103) positive torque from reaching vehicle wheels (23, 24).
Example 2. The computer system (14) of example 1, wherein the processing circuitry (11) is configured to determine that the vehicle (10) is to remain at standstill by detecting that brakes of the vehicle (10) are engaged.
Example 3. The computer system (14) of example 1 or 2, wherein the processing circuitry (11) is configured to detect (S102) rotational movement of an output shaft (16) by comparing the rotational movement to a predefined threshold (T), and the preventing (S103) of positive torque occurs when the detected movement exceeds the threshold (T).
Example 4. The computer system (14) of example 3, wherein the predefined threshold (T) is defined in terms of angular velocity, angular displacement, or torsional deformation of the output shaft (16).
Example 5. The computer system (14) of example 3 or 4, wherein the processing circuitry (11) is configured to dynamically adjust the predefined threshold (T) based on one or more of: vehicle load, road gradient, braking pressure, ambient temperature, or vehicle acceleration profile.
Example 6. The computer system (14) of any one of the preceding examples, wherein the output shaft (16) is monitored utilizing one or more rotational sensors (17) arranged proximate to the gearbox (21).
Example 7. The computer system (14) of example 6, wherein the rotational sensors (17) are arranged to be positioned at axially spaced-apart locations along the output shaft (16) to enable detection of torsional deformation.
Example 8. The computer system (14) of any one of the preceding examples, wherein the processing circuitry (11) is configured to, upon preventing (S103) positive torque from reaching the vehicle wheels (23, 24), cut fuel injection to a vehicle engine (20), disengage a clutch between the engine (20) and the gearbox (21), and/or issue a torque reduction command via an engine control interface.
Example 9. The computer system (14) of any one of the preceding examples, wherein the detected rotational movement corresponds to torsional deformation of the output shaft (16) resulting from opposing engine torque and braking force.
Example 10. The computer system (14) of any one of the preceding examples, wherein the processing circuitry (11) is configured to discontinue detection of rotational movement when the vehicle (10) is no longer required to remain at standstill.
Example 11. The computer system (14) of any one of the preceding examples, wherein the processing circuitry (11) is configured to determine that the vehicle (10) is to remain at standstill based on a control mode selected for the vehicle (10), comprising at least one of: a parking mode, a loading mode, a refueling mode or an autonomous standby mode.
Example 12. The computer system (14) of any one of the preceding examples, wherein the processing circuitry (11) is configured to initiate a diagnostic or alert signal if rotational movement is detected while the vehicle (10) is intended to remain at standstill.
Example 13. The computer system (14) of any one of the preceding examples, wherein the processing circuitry (11) is configured to log the detection of rotational movement and any countermeasures taken for post-event analysis.
Example 14. The computer system (14) of any one of the preceding examples, wherein the output shaft (16) comprises a toothed wheel or cogwheel mounted to the shaft, and the rotational sensor (17) is configured to detect passage of the teeth to determine shaft movement.
Example 15. The computer system (14) of any one of the preceding examples, wherein the processing circuitry (11) is configured to continue detection of rotational movement after initiation of the preventing (S103) of positive torque from reaching vehicle wheels (23, 24).
Example 16. The computer system (14) of any one of the preceding examples, wherein rotational movement is detected using a combination of angular velocity and torsional deformation measurements.
Example 17. A vehicle (10) comprising the computer system (14) of any one of examples 1-16.
Example 18. A method of a computer system (14) for ensuring that a vehicle (10) remains at standstill, comprising: determining (S101) that the vehicle (10) is to remain at standstill; detecting (S102) rotational movement of an output shaft (16) of a vehicle gearbox (21); and in response thereto preventing (S103) positive torque from reaching vehicle wheels (23, 24).
Example 19. A computer program product comprising program code (13) for performing, when executed by the processing circuitry (11), the method of example 18.
Example 20. A non-transitory computer-readable storage medium (12) comprising instructions (13), which when executed by the processing circuitry (11), cause the processing circuitry (11) to perform the method of example 18.

The operations described in any of the exemplary aspects herein are described to provide examples and discussion. The operations may be performed by hardware components, may be embodied in machine-executable instructions to cause a processor to perform the operations, or may be performed by a combination of hardware and software. Although a specific order of operations may be shown or described, the order of the operations may differ. In addition, two or more operations may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, operations, elements, and/or components, but do not preclude the presence or addition of one or more other features, integers, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (14) configured to ensure that a vehicle (10) remains at standstill, the computer system comprising processing circuitry (11) configured to:
determine (S101) that the vehicle (10) is to remain at standstill;
detect (S102) rotational movement of an output shaft (16) of a vehicle gearbox (21); and in response thereto
prevent (S103) positive torque from reaching vehicle wheels (23, 24).

2. The computer system (14) of claim 1, wherein the processing circuitry (11) is configured to determine that the vehicle (10) is to remain at standstill by detecting that brakes of the vehicle (10) are engaged.

3. The computer system (14) of claim 1 or 2, wherein the processing circuitry (11) is configured to detect (S102) rotational movement of an output shaft (16) by comparing the rotational movement to a predefined threshold (T), and the preventing of positive torque occurs when the detected movement exceeds the threshold (T).

4. The computer system (14) of claim 3, wherein the predefined threshold (T) is defined in terms of angular velocity, angular displacement, or torsional deformation of the output shaft (16).

5. The computer system (14) of claim 3 or 4, wherein the processing circuitry (11) is configured to dynamically adjust the predefined threshold (T) based on one or more of: vehicle load, road gradient, braking pressure, ambient temperature, or vehicle acceleration profile.

6. The computer system (14) of any one of the preceding claims, wherein the output shaft (16) is monitored utilizing one or more rotational sensors (17) arranged proximate to the gearbox (21).

7. The computer system (14) of claim 6, wherein the rotational sensors (17) are arranged to be positioned at axially spaced-apart locations along the output shaft (16) to enable detection of torsional deformation.

8. The computer system (14) of any one of the preceding claims, wherein the processing circuitry (11) is configured to, upon preventing positive torque from reaching the vehicle wheels (23, 24), cut fuel injection to a vehicle engine (20), disengage a clutch between the engine (20) and the gearbox (21), and/or issue a torque reduction command via an engine control interface.

9. The computer system (14) of any one of the preceding claims, wherein the detected rotational movement corresponds to torsional deformation of the output shaft (16) resulting from opposing engine torque and braking force.

10. The computer system (14) of any one of the preceding claims, wherein the processing circuitry (11) is configured to discontinue detection of rotational movement when the vehicle (10) is no longer required to remain at standstill.

11. The computer system (14) of any one of the preceding claims, wherein the processing circuitry (11) is configured to determine that the vehicle (10) is to remain at standstill based on a control mode selected for the vehicle (10), comprising at least one of: a parking mode, a loading mode, a refuelling mode or an autonomous standby mode.

12. A vehicle (10) comprising the computer system (14) of any of claims 1-11.

13. A method of a computer system (14) of ensure that a vehicle (10) remains at standstill, comprising:
determining (S101) that the vehicle (10) is to remain at standstill;
detecting (S102) rotational movement of an output shaft (16) of a vehicle gearbox (21); and in response thereto
preventing (S103) positive torque from reaching vehicle wheels (23, 24).

14. A computer program product comprising program code (13) for performing, when executed by the processing circuitry (11), the method of claim 13.

15. A non-transitory computer-readable storage medium (12) comprising instructions (13), which when executed by the processing circuitry (11), cause the processing circuitry (11) to perform the method of claim 13.
